# EUROPEAN PATENT APPLICATION

(11) **EP 2 661 072 A1**
(43) Date of publication of application: **06.11.2013**
(21) Application number: 12166219.1
(22) Date of filing: 30.04.2012
(51) Int. Cl.: H04N 5/232, H04N 5/77

(54) **Method and device for high quality processing of still images while in burst mode**

(71) Applicant: BlackBerry Limited, Waterloo, ON N2L 3W8 (CA)
(72) Inventor: Kumar, Arun, Waterloo, Ontario N2L 3W8 (CA); Daigle, Joshua Lucien, Waterloo, Ontario N2L 3W8 (CA); D'Souza, Stephen Richard, Ottawa, Ontario K2K 3K1 (CA); Boucher, Antoine Gilles Joseph, Waterloo, Ontario N2L 3W8 (CA)
(74) Representative: Patel, Binesh

(57) **Abstract**

The present disclosure provides for processing of data captured by an image sensor in bust mode at two different quality levels. The data processed at the higher quality level is stored in a buffer memory until the higher quality processing is performed.

## Description

### TECHNICAL FIELD

The present disclosure relates to digital cameras, and more particularly to a method and device for high quality processing of still images while in burst mode.

### BACKGROUND

Digital cameras, including digital cameras built into smartphones and other multipurpose electronic devices, are sometimes provided with a burst mode in which a series of images are captured continuously. The speed at which the images are captured in burst mode is often faster than the time required to conduct high quality processing on the data. Thus, many digital cameras have a burst pipe, or path, to which the data from an image sensor is directed in burst mode. However, processing in the burst pipe is generally of a lower quality than the processing conducted when a single still photo is captured.

### BRIEF DESCRIPTION OF THE DRAWINGS

Figure 1 is a block diagram illustrating a electronic device suitable for carrying out example embodiments of the present disclosure.

Figure 2 is a block diagram illustrating an image capture assembly of the electronic device of Figure 1.

Figure 3 is a block diagram illustrating an image capture assembly in accordance with one example embodiment of the present disclosure.

Figure 4 is a flowchart of a method for high quality processing of still images while in burst mode in accordance with one example embodiment of the present disclosure.

Figure 5 is a diagram showing the flow of data in an image capture assembly in accordance with one example embodiment of the present disclosure.

Figure 6 is a diagram showing the flow of data in an image assembly in accordance with one example embodiment of the present disclosure.

Figure 7 is a diagram showing the flow of data in an image assembly in accordance with one example embodiment of the present disclosure.

### DETAILED DESCRIPTION

Reference will now be made to the accompanying drawings which show example embodiments of the present disclosure. For simplicity and clarity of illustration, reference numerals may be repeated among the Figures to indicate corresponding or analogous elements. Numerous details are set forth to provide an understanding of the example embodiments described herein. The example embodiments may be practised without some of these details. In other instances, well-known methods, procedures, and components have not been described in detail to avoid obscuring the example embodiments described. The description is not to be considered as limited to the scope of the example embodiments described herein.

Any reference to direction or orientation stated herein is for convenience and is not intended to be limiting unless explicitly stated herein. Any directional references in relation to the graphical user interface (GUI) are relative to the screen orientation of the GUI rather than a fixed point or reference on the host electronic device. The term "user interface" is sometimes used herein to refer to the GUI for convenience. For the purpose of the present disclosure, the terms device orientation and device position are treated equivalently.

The present disclosure provides high quality still image processing in burst mode. Data captured by an image sensor operating in burst mode is sent concurrently to separate paths or pipes. One pipe is a burst pipe where the data is processed a first quality level. The second pipe is for processing at a higher quality level.

In accordance with one example embodiment, there is provided a method of processing a still image on an image processing device operating in burst mode, the method comprising: processing data provided by an image sensor operating in burst mode at a first quality to produce first quality processed data; storing the data to a buffer memory concurrently with the processing at the first quality; and processing the data stored in the buffer memory at a second quality to produce second quality processed data, the second quality processed data being processed at a higher quality than the first quality processed data.

In accordance with a further example embodiment, there is provided an image capture assembly comprising: an image sensor capable of operating in burst mode; an image encoder for encoding data into still images; a buffer memory; and an image processor coupled to the image sensor, the image encoder and the buffer memory and configured to: process data provided by the image sensor operating in burst mode at a first quality to produce first quality processed data; store the data to the buffer memory concurrently with the processing at the first quality; and process the data stored in the buffer memory at a second quality to produce second quality processed data, the second quality processed data being processed at a higher quality than the first quality processed data

In accordance with yet a further example embodiment, there is provided an image processing device, comprising: an image sensor capable of operating in burst mode; an image encoder for encoding data into still images; a buffer memory; and a processor coupled to the image sensor, the image encoder and the buffer memory and configured for performing the method(s) set forth herein.

In accordance with yet a further embodiment of the present disclosure, there is provided a computer readable medium having computer readable instructions stored thereon that, when executed, cause a processor to perform the method(s) set forth herein.

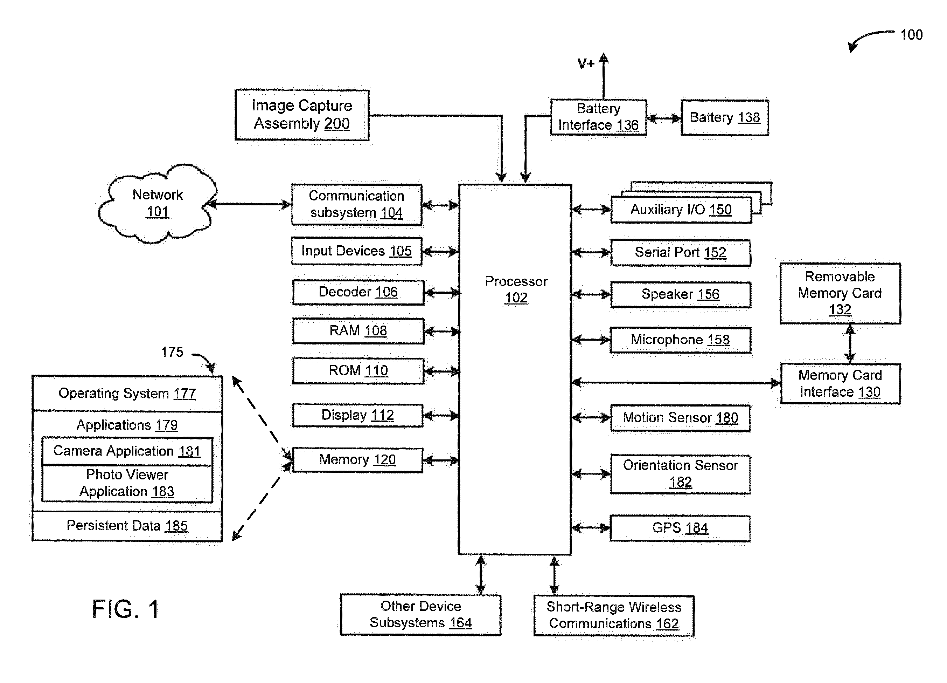

Reference is first made to Figure 1 which illustrates an electronic device 100 in which example embodiments described in the present disclosure can be applied. The electronic device 100 described below has wireless communication capabilities; however, it is contemplated that the teachings of the present disclosure may be applied to devices without wireless communication capabilities. Examples of the electronic device 100 include, but are not limited to, a mobile phone, smartphone or superphone, tablet computer, notebook computer (also known as a laptop, netbook or ultrabook computer depending on the device capabilities), wireless organizer, personal digital assistant (PDA), electronic gaming device, and a digital camera (which may be capable of both still image and video image capture).

The electronic device 100 includes a rigid case (not shown) housing the electronic components of the electronic device 100. The electronic components of the electronic device 100 are mounted on a printed circuit board (not shown). The electronic device 100 includes a controller comprising at least one processor 102 (such as a microprocessor) which controls the overall operation of the electronic device 100. Communication functions, including data and voice communications, are performed through a communication subsystem 104. Data received by the electronic device 100 may be decompressed and decrypted by a decoder 106. The communication subsystem 104 receives messages from and sends messages to a wireless network 101. The wireless network 101 may be any suitable type of wireless network.

The processor 102 interacts with other components, such as one or more input devices 105, Random Access Memory (RAM) 108, Read Only Memory (ROM) 110, a display 112 such as a colour liquid crystal display (LCD), persistent (non-volatile) memory 120 which may be flash erasable programmable read only memory (EPROM) memory ("flash memory") or any other suitable form of memory, an image capture assembly 200, a motion sensor 180 which enables to processor 102 to determine whether the electronic device 100 is in motion and the nature of any sensed motion at any appropriate time, e.g., when an image is captured, an orientation sensor 182 which enables the processor 102 to determine which direction the electronic device 100 is pointed at any appropriate time, e.g., when an image is captured, global positioning system (GPS) device 184 which enables the processor 102 to determine GPS coordinates (i.e., location) of the electronic device 100 at any appropriate time, e.g., when an image is captured, auxiliary input/output (I/O) subsystems 150, data port 152 such as serial data port (e.g., Universal Serial Bus (USB) data port), speaker 156, microphone 158, short-range communication subsystem 162, and other device subsystems generally designated as 164. The components of the electronic device 100 are coupled via a communications bus (not shown) which provides a communication path between the various components.

The display 112 typically includes a display area in which information may be displayed and a non-display area extending around the periphery of the display area. Information is not displayed in the non-display area. The non-display area may be utilized to accommodate, for example, electronic traces or electrical connections, adhesives or other sealants, and/or protective coatings around the edges of the display area.

The display 112 may be provided as part of a touch-sensitive display which provides an input device 105. The display 112 which together with a touch-sensitive overlay (not shown) operably coupled to an electronic controller (not shown) comprise the touch-sensitive display. The touch-sensitive display is typically a capacitive touch-sensitive display which includes a capacitive touch-sensitive overlay may be any other suitable touch-sensitive display, such as a resistive, infrared, surface acoustic wave (SAW) touch-sensitive display, strain gauge, optical imaging, dispersive signal technology, acoustic pulse recognition, and so forth, as known in the art. The overlay of the touch-sensitive display may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

User-interaction with the GUI is performed through the input devices 105. Information, such as text, characters, symbols, images, icons, and other items are rendered and displayed on the display 112 via the processor 102. The processor 102 may interact with the orientation sensor to detect direction of gravitational forces or gravity-induced reaction forces so as to determine, for example, the orientation of the electronic device 100 in order to determine a screen orientation for the GUI.

The input devices 105 may include a keyboard, control buttons such as a power toggle (on/off) button (not shown), a camera button (not shown) for enabling a camera mode, a capture button (not shown) for enabling an image capture sequence when in the camera mode, one or more zoom buttons (not shown) for enabling a selection of a zoom setting when in the camera mode, and a navigation device (not shown) for navigating through stored data, such as digital images, menu choices and the like which are displayed on the display 112. When the display 112 is provided as part of a touch-sensitive display, the capture button, zoom button and other camera controls may be provided by onscreen user interface elements displayed on the display 112 instead of, or in addition to, physical interface components. The keyboard may be provided instead of, or in addition to, a touch-sensitive display depending on the embodiment. At least some of the control buttons may be multi-purpose buttons rather than special purpose or dedicated buttons.

The electronic device 100 also includes a memory card interface 130 for receiving a removable memory card 132 comprising persistent memory, such as flash memory. A removable memory card 132 can be inserted in or coupled to the memory card interface 130 for storing and reading data by the processor 102 including, but not limited to still images and optionally video images captured by the image capture assembly 200. Other types of user data may also be stored on the removable memory card 132. Other types of removable digital image storage media, such as magnetic hard drives, magnetic tape, or optical disks, may be used in addition to, or instead of, the removable memory card 132.

The processor 102 operates under stored program control and executes software modules 175 stored in memory, for example, in the persistent memory 120. As illustrated in Figure 1, the software modules 175 comprise operating system software 177 and software applications 179. The software applications 179 include a camera application 181 and photo viewer application 183. The camera application 181 contains the logic for operating the image capture assembly 200 and capturing still images and optionally video images from the image capture assembly 200 and storing the still images and video images in the persistent memory 120. The photo viewer application 183 contains logic for displaying data (i.e., still images and optionally video images) from the persistent memory 120 and data from the image capture assembly 200 on the display 112. Persistent data 185, such as user data, can also be stored in the persistent memory 120. The persistent data 185 may include digital media files stored in the electronic device 100 such as still images and/or video images captured the image capture assembly 200, or other still images and/or video images transferred, downloaded or otherwise stored on the persistent memory 120.

The software modules 175 or parts thereof may be temporarily loaded into volatile memory such as the RAM 108. The RAM 108 is used for storing runtime data variables and other types of data or information. Although specific functions are described for various types of memory, this is merely one example, and a different assignment of functions to types of memory could also be used.

Still images and optionally video images captured the image capture assembly 200 are stored in persistent memory after being captured. The persistent memory may be one or any combination of the internal persistent memory 120, the removable memory card 132 or remote persistent storage. The remote persistent storage may be a cloud based resource, such as a remote content server, accessible by the wireless network 101 or possibly via a wireline (e.g., via the data port 152) or short-range wireless connection (e.g., via the short-range communication subsystem 162) to a host computer having wireline access to the cloud based resource. The location at which captured still images and optionally video images is stored is typically a configurable setting which may be set by a user either in advance or at the time of capture.

The camera application 181 and/or photo viewer application 183 can access the remote persistent storage and optionally cloud based applications through the wireless network 101 or possibly via a wireline or short-range wireless connection to a host computer having wireline access to the cloud based resource. The use of cloud based or other remote persistent storage allows access to still images and optionally video images captured the image capture assembly 200 from nearly any computer or portable electronic device having access to the Internet.

The electronic device 100 also includes a battery 138 as a power source, which is typically one or more rechargeable batteries that may be charged, for example, through charging circuitry coupled to a battery interface such as the serial data port 152. The battery 138 provides electrical power to at least some of the electrical circuitry in the electronic device 100, and the battery interface 136 provides a mechanical and electrical connection for the battery 138. The battery interface 136 is coupled to a regulator (not shown) which provides power V+ to the circuitry of the electronic device 100.

A received signal, such as a text message, an e-mail message, or web page download, is processed by the communication subsystem 104 and input to the processor 102. The processor 102 processes the received signal for output to the display 112 and/or to the auxiliary I/O subsystem 150. A subscriber may generate data items, for example e-mail messages, which may be transmitted over the wireless network 101 through the communication subsystem 104, for example.

The motion sensor 180 may comprise an accelerometer (such as a three-axis accelerometer) or other suitable motion sensor. The orientation sensor 182 may comprise an accelerometer (such as a three-axis accelerometer), electronic compass, gyroscope, or a combination thereof. Other suitable orientation sensors could be used instead of, or in addition to, the accelerometer, electronic compass and gyroscope. The motion sensor 180 and orientation sensor 182, or parts thereof, may be combined or shared, for example, within an integrated component. The processor 102, or controller (not shown) of a three-axis accelerometer, can convert acceleration measurements into device orientations.

The electronic device 100 may connect to a host personal computer (not shown) via the serial data port 152 or short-range communication subsystem 162 communicating over a suitable interconnection, such as a USB connection, Firewire^{™} connection, Bluetooth^{™} connection or the like.

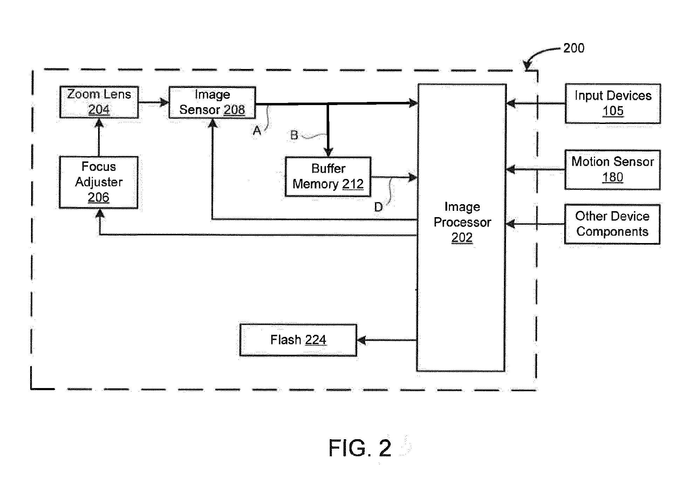

Referring now to Figure 2, an example embodiment of the image capture assembly 200 of the electronic device 100 will be described in more detail. The image capture assembly 200 includes an image processor 202 which performs various image processing functions described below. The image processor 202 is typically a programmable image processor but could be, for example, a hard-wired custom integrated circuit (IC) processor, a general purpose microprocessor, or a combination of hard-wired custom IC and programmable processors. When the image capture assembly 200 is part of a multipurpose electronic device such as a mobile phone, smartphone or superphone, at least some of the functions of the image capture assembly 200 may be performed by the main processor 102 of the host electronic device 100. It is contemplated that all of the functions performed by the image processor 202 could be performed by the main processor 102, in which case the image processor 202 can be omitted. Furthermore, the image capture assembly 200 has access to various components of the host electronic device 100, and can receive inputs from and send outputs to various components of the host electronic device 100, input such as the input devices 105, motion sensor 180, orientation sensor 182, GPS 184, RAM 108, persistent memory 120 and the like.

The image capture assembly 200 in some embodiments also includes a zoom lens 204 which is controlled by a focus adjuster 206, such as zoom and focus motors, which adjust the focal length and focus distance of the zoom lens 204. The zoom lens 204 has a variable aperture the size of which is expressed by an f-number (sometimes called focal ratio, f-ratio, f-stop, or relative aperture) which is a measure of the diameter of the aperture of the zoom lens 204. The f-number is the focal length divided by the "effective" aperture diameter. The f-number is a dimensionless number that is a quantitative measure of lens "speed".

The zoom lens 204 provides an image to an image sensor 208. The image sensor 208 may have a number of aspect ratios, such as a 4:3 and 16:9 image aspect ratios, and a number of image resolutions. In some embodiments, the image sensor 208 is a charge-coupled device (CCD) sensor; however, a complementary metal-oxide semiconductor (CMOS) sensor or other suitable image sensor could be used. An adjustable aperture and shutter assembly (not shown) in the zoom lens 204 is used to control the aperture size and the exposure time of the image sensor 208. In other embodiments, the zoom lens 204 could be replaced with a fixed focal length lens (also known as a "prime" lens) in which case the focus adjuster 206 merely adjusts the focus distance of the lens. Digital zoom may be provided by digital image processing performed by the image processor 202 of the image capture assembly 200 or processor 102 (rather than optical zoom provided by the zoom lens 204). In other embodiments, the shutter assembly could be omitted in favour of an electronic shutter.

The image processor 202 controls the image sensor 208 by supplying various control signals to the image sensor 208. The image processor 202 also controls the focus adjuster 206, and a flash 224 for emitting light to illuminate a scene being captured by the focus lens 204. The input devices 105 provide user controls which can control the operation of the image capture assembly 200. A captured image signal A output by the image sensor 208 is temporarily stored in a buffer memory 212, such as a Dynamic random-access memory (DRAM) buffer memory.

The image processor 202 produces focus signals which drive the focus adjuster 206 (e.g., zoom and focus motors) to adjust the focus of an image providing the image sensor output for the captured image signal, typically in response to the activation of the capture button. The image processor 202 produces focus signals which drive the focus adjuster 206 (e.g., zoom and focus motors) to adjust the focus of an image providing the image sensor output for the captured image signal in response to the activation of the capture button. A passive autofocus system is typically provided by the electronic device 100. In the passive autofocus system, a captured image signal A is provided to the image processor 102 which performs autofocus calculations on the captured image signal A. Focus signals are sent to the focus adapter 206 to adjust the focus distance of the zoom lens 204 as necessary as a result of the output the autofocus calculations. The autofocus calculations are typically performed using either contrast detection or phase detection methods which rely on moving the zoom lens 204 to make minor adjustments in the focus distance until a maximal (or optimal) contrast is obtained. The autofocus calculations assume that maximal (or optimal) contrast corresponds to maximal sharpness. The nature of the autofocus calculations is outside the scope of the present disclosure and will not be described in further detail herein. Autofocus methods and calculations suitable for use by the image processor 202 are well known in the art and will be readily known to the skilled person.

The image processor 202 may continuously produce focus signals thereby providing continuous autofocus when the image capture assembly 200 is in an active or ready-to-capture state (rather than an inactive state such as when displaying a full screen menu) such that the images being stored to the buffer memory 212 are focused images rather than performing autofocus operations in response to the activation of the capture button as mentioned previously.

In other embodiments, an active autofocus system could be used instead of the passive autofocus system described above. The active autofocus system may include an infrared (IR) emitter and IR sensor which determines a distance from the IR emitter to an object at the focus point using the time for reflected IR waves to return to the IR sensor and/or the intensity of the reflected IR waves. The focus adjuster 206 moves the zoom lens 204 in accordance with the determined distance.

The captured image signal A may also be output to the display 112 to provide a preview image. The captured image signal A may be used to provide a real-time or "live" preview in which a real-time image (or an approximation of an image) of the image captured with the image sensor 208 is displayed on the display 112 as a thumbnail image (e.g., reduced size/resolution version) of the captured image for graphical processing efficiency, or alternatively a dedicated electronic viewfinder device.

In a single image capture mode, a captured image signal D provided by the buffer memory 212 is subsequently processed by the image processor 202 to produce a processed digital image file, which may contain a still digital image or a video image.

In one example embodiment, while the image sensor 208 is in burst (or continuous capture) mode, the image files are output to the image processor 202 for basic processing and encoding as an encoded digital image. This path from the image sensor to the image processor for encoding while in burst mode is sometimes known as the burst pipe. The processing occurs at a speed fast enough to keep up with the image capture speed of the image sensor, in some cases between 15fps and 30fps. In some embodiments the processing is slower and in other embodiments the processing is faster. The speed depends on the capabilities of the overall system. The processing in the burst pipe is usually of lower quality than the processing mentioned above that is performed subsequent to the image signal stored to the buffer memory 212 in single image capture mode. The images produced in burst mode may be of the same resolution as the images produced in single image capture mode. Non-limiting examples of the encoding that can be performed are JPEG (Joint Photographic Experts Group), JPEG 2000, TIFF (Tagged Image File Format), and Exif (Exchangeable image file format) encoding. The encoded digital images can then be stored, used for producing panorama images, used in a retro-active burst application (such as temporal bracketing), used for image stabilization or any other application which used images from burst mode. Concurrently with the encoding of the digital image files, the digital image files or in some embodiments, raw data from the image sensor 208, are sent to the buffer memory 212. The data stored in the buffer memory 212 is then used to perform higher quality processing, such as but not limited to, advanced noise filtering before sending the data to be encoded.

The buffer memory 212 may also be used to eliminate shutter lag in what is sometimes referred to as a "zero" or "negative" shutter lag mode. A sequence of images acquired from the image sensor 208 is stored in the buffer memory 212 in a chronological order of a time at which the images were captured. The images are typically stored in association with a date and/or time at which the images were captured to assist subsequent retrieval and/or processing, e.g. for accessing and retrieval of images based on the chronological order. When in a zero shutter lag mode, images are continuously sampled and stored to the buffer memory 212 up to a set limit. The limit of the buffer memory 212 is typically a number of images, e.g., 1, 2, 3, 4, 5, 10, 25 or other suitable number which depends on a frame rate the image sensor 208 (the number of frames per second (fps)) captured by the image sensor 208) and other factors. The limit of the buffer memory 212 could be another suitable limit such as a total size of the image or a duration of capture (e.g., all images take in the last n number of seconds). The limit of the buffer memory 212 may be configurable in some embodiments. The limit is set so that the captured images stored in the buffer memory 212 are generally contemporaneous with the real-time preview image. Accordingly, the limit of the buffer memory 212 depends largely on the frame rate.

The zero shutter lag mode differs from a burst mode in that the images are only temporarily stored in the buffer memory 212 and that the sampling is continuous rather than being dependent on the activation of the capture button. In the zero shutter lag mode, the capture button cannot be activated as the capture button is the trigger for changing the storage of the captured images from temporary storage in the buffer memory 212 to persistent storage in the memory 120 or removeable memory card 132.

The real-time image displayed on the display 112 is synchronized with the images stored in the buffer memory 212 such that, when the capture button is activated, the image in the buffer memory 212 which corresponds to the real-time image displayed on the display 112 when the capture button was activated is selected from the buffer memory 212 for further processing by the image processor 202, and is stored in persistent memory such as the persistent memory 120 or the removeable memory card 132. In this manner, the image displayed to the user corresponds to the image captured by the image capture assembly 200, thereby providing no shutter lag.

The image processor 202 may perform various other image processing functions, including colour interpolation and colour and tone correction to produce rendered image data, such as standard Red Green Blue (sRGB) image data. The rendered image data is then stored in the memory of the removeable memory card 132 or persistent memory 120. In some embodiments, the rendered image data may be compressed before storing, for example, the rendered image data may be JPEG compressed and stored as a JPEG image file, which may be in the Exchangeable image file (Exif) format or other suitable format which preferable supports image metadata, such as one or more of a date/time the image was captured, f-number of the zoom lens 204 at which the image was captured, GPS location and pointing direction when the image was captured and possibly other camera settings.

The processing performed by the image processor 202 is typically controlled by firmware stored in a firmware memory (not shown), which may be flash memory or any other suitable form of memory. The image processor 202 processes the digital input image from the buffer memory 212, using RAM memory (such as RAM 108 of the host electronic device or possibly separate, dedicated RAM) to store intermediate results during processing.

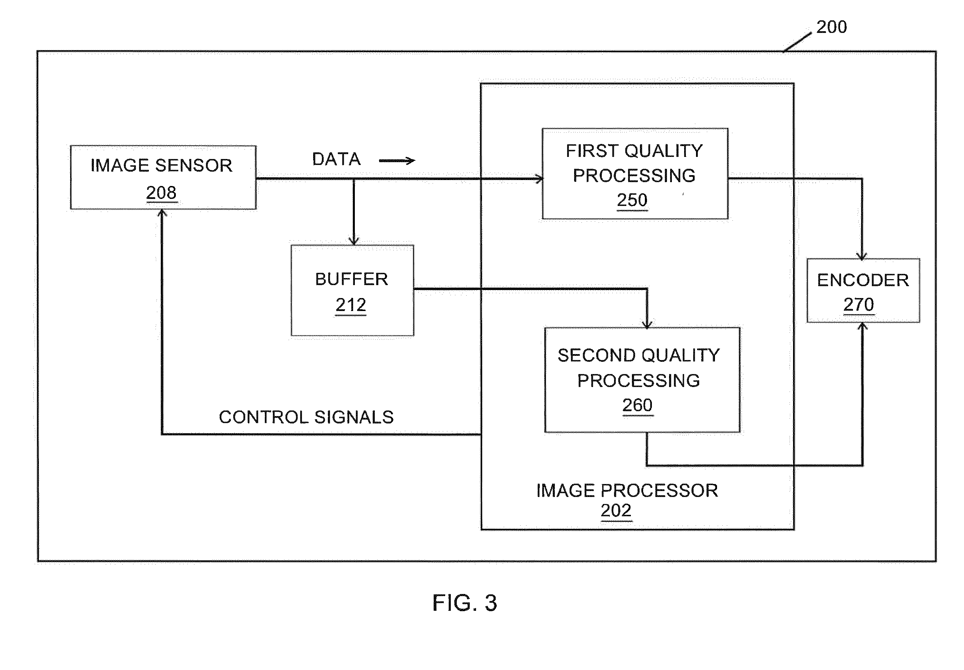

Referring now to Figure 3, an example embodiment of the image capture assembly 200 for use in an image processing device, such as the electronic device 100, will be described. The image capture assembly of this embodiment comprises an image sensor 208, an image encoder 270, a buffer memory 212 and an image processor 202. The image sensor 208 is capable of operating in burst mode. The image encoder 270 is for encoding data into still images. Non-limiting examples of the image encoder are a JPEG encoder and a TIFF encoder. The image processor 202 is coupled to the image sensor 208, the image encoder 270 and the buffer memory 212 and configured to: process data provide by the image sensor 208 operating in burst mode at a first quality to produce first quality processed data; store the data to the buffer memory 212 concurrently with the processing at the first quality; and process the data stored in the buffer memory 212 at a second quality to produce second quality processed data, the second quality processed data being processed at a higher quality than the first quality processed data. The first quality processing may comprise, for example, basic or on-the-fly processing whereas the second quality processing may comprise, for example, advanced noise filtering among other "higher" quality processing.

In some embodiments, the image encoder 270 is part of the image processor 202. In some embodiments, the image processor 202 is an image signal processor such as, but not limited to, a ST Microelectronics - STV0987; MtekVision - MV9319; Fujitsu - MBG041 M-7MO; TI OMAP4430/60/70; or Qualcomm MSM8655/8660/8960.

In some embodiments, the buffer memory 212 s a circular buffer, in which earliest stored data is overwritten by the latest stored data once the buffer memory 212 reaches its capacity.

In some embodiments, the image sensor 208 captures data at a rate of between 15 frames per second and 30 frames per second in burst mode.

While the components of the electronic device 100 are shown as separate blocks in Figures 1, 2, and 3, the functions of various components may be combined in actual processing elements, circuits and the like. Furthermore, some of the functional blocks of Figures 1, 2, and 3 may be separated into one or more sub blocks when implemented in actual processing elements, circuits and the like.

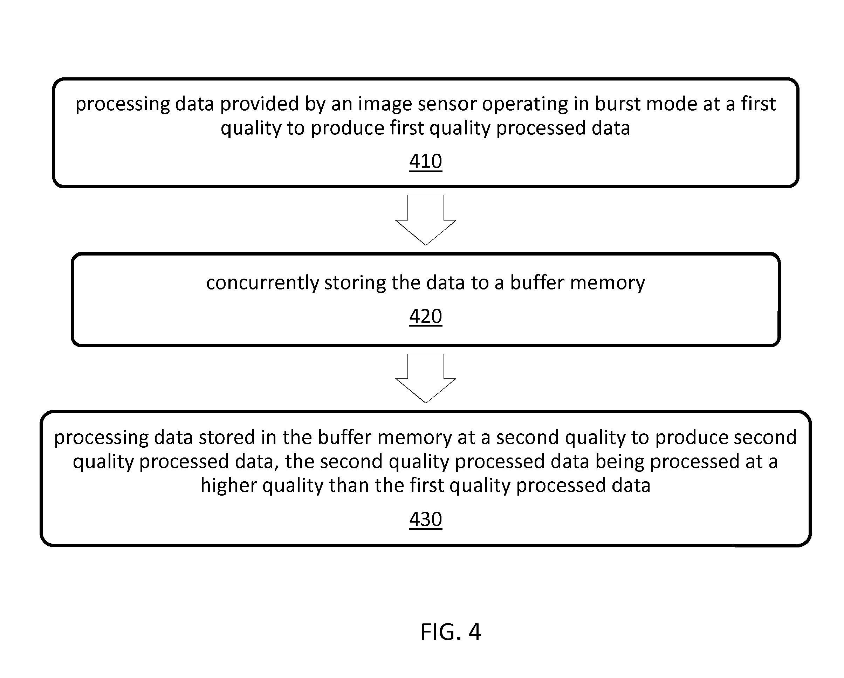

Figure 4 is a flowchart of a method 400 for processing a still image on an image processing device operating in burst mode in accordance with one example embodiment of the present disclosure. The method 400 may be carried out, at least in part, by firmware or software such as the camera application 181, executed by the processor 102 and/or image processor 202. Coding of software for carrying out such a method 400 is within the scope of a person of ordinary skill in the art provided the present disclosure. The method 400 may contain additional or fewer processes than shown and/or described, and may be performed in a different order. Computer-readable code executable by at least one processor 102 and/or image processor 202 to perform the method 400 may be stored in a computer-readable medium such as the persistent memory 120.

The method 400 starts with the step 410 of processing 250 data provided by an image sensor 208 operating in burst mode at a first quality to produce first quality processed data. The next step 420 is storing the data to a buffer memory 212 concurrently with the processing at the first quality. The next step 430 is processing 260 the data stored in the buffer memory 212 at a second quality to produce second quality processed data, the second quality processed data being processed at a higher quality than the first quality processed data.

In some embodiments, processing at least some of the data provided by the image sensor 208 operating in burst mode at a first quality occurs before storing the data to the buffer memory 212. Thus, the data sent to the buffer memory 212 is the first quality processed data. In other embodiments, raw data from the image sensor is sent to the buffer memory 212.

In some embodiments, the method further comprises encoding the first quality processed data to produce at least one still image. The encoding could be, for example, JPEG encoding. In other examples, the encoding is TIFF encoding. The encoded still images can be used for a function related to burst mode, such as but not limited to, panorama images, retro-active burst, image stabilization or a combination thereof. The encoded still images can also be stored to a storage medium, such as the ROM 110, persistent memory 120, and removable memory card 132 described above with reference to Figure 1. The encoded still images are typically encoded with metadata such as one or more of a date/time the image was captured.

One example of a function related to burst mode is a retro-active burst function that enables scrolling back and forth through images taken in burst mode. As part of the scrolling in at least some examples, encoded still images are selected the selected encoded still images or an approximation thereof are displayed on the display 112 in response to received input selecting a previous or next image, typically in chronological order from an initial image such as an originally selected image. The input may be, for example, directional input such as a left drag or swipe (movement right-to-left) on the touch-sensitive display for a previous image or a right drag or swipe (movement left-to-right) on the touch-sensitive display for a next image. In some embodiments, approximately 20 frames are stored to a memory, such as a buffer memory 212 or removable memory card 132. Any number of frames may be stored, depending on the memory and processing speed available.

In some examples of retro-active burst, a portion of an encoded still image may be selected in response to input, such as a tap or touch on the touch-sensitive display, and a corresponding portion in a previous image or next images is selected and displayed on the display 112 rather than the entire image. The portion of the previous image or next image may be displayed in a box, pop-up, tooltip or other visual cue for increased visibility. Further input, such as touching or tapping the touch-sensitive display at the location of the displayed portion from the previous image or next image, may merge the displayed portion from the previous image or next image into that portion of the initial image to create a composite image. It will be appreciated by persons skilled in the art that portions of the initial image and the displayed portion from the previous image or next image correspond to the same pixel areas in the images. As part of the merging, the displayed portion from the previous image or next image replaces the corresponding portion of the initial image. This may be repeated for several portions of the initial image. The images from which the portion is merged into the initial image may be from the same or different images. The portions of the initial image which are selected in the retro-active burst may be automatically selected in accordance with defined criteria. In some examples, the defined criteria may be faces detected within the image using facial recognition techniques, which are known in the art.

In an embodiment, the method further comprises encoding the second quality image to produce at least one still image. Examples of the encoding include, but are not limited to, JPEG and TIFF encoding. The still image can be stored to a storage device, such as but not limited to the ROM 110, persistent memory 120, and removable memory card 132 described above with reference to Figure 1.

In some embodiments, the second quality processing comprises passing the data through one or more noise filters. Non-limiting examples of noise filters include temporal, color and/or bayer type noise filters. In some embodiments, the noise filter performs filtering that is more advanced than any noise filtering that may be performed in the first quality processing. In some embodiments, advanced color shading compensation is performed. In some embodiments, advanced edge/detail enhancement is performed. The type and degree of advanced processing depends on the image processor 208 used.

In some embodiments, the second quality processing occurs in response to an input requesting capture of a high quality still image. For example, the electronic device 100 may have burst mode "always on" and perform the higher quality processing only when the capture button is pressed. In another example, burst mode can be activated in one manner and capturing a high quality still image can be activated in another manner. For example, pressing and holding the capture button for a duration which is greater than or equal to a threshold duration can activate burst mode, whereas simply pressing the capture button (e.g., pressing for less than the threshold duration) can activate the capture of a high quality still image.

In some embodiments, the method 400 comprises processing the data from the image processor at a third quality to produce a preview image and displaying the preview image on a display. The preview image can be of a smaller size than the images produced by the first and second quality processing. The preview image can be of a lower resolution than the images produced by the first and second processing (which are the same resolution as noted above).

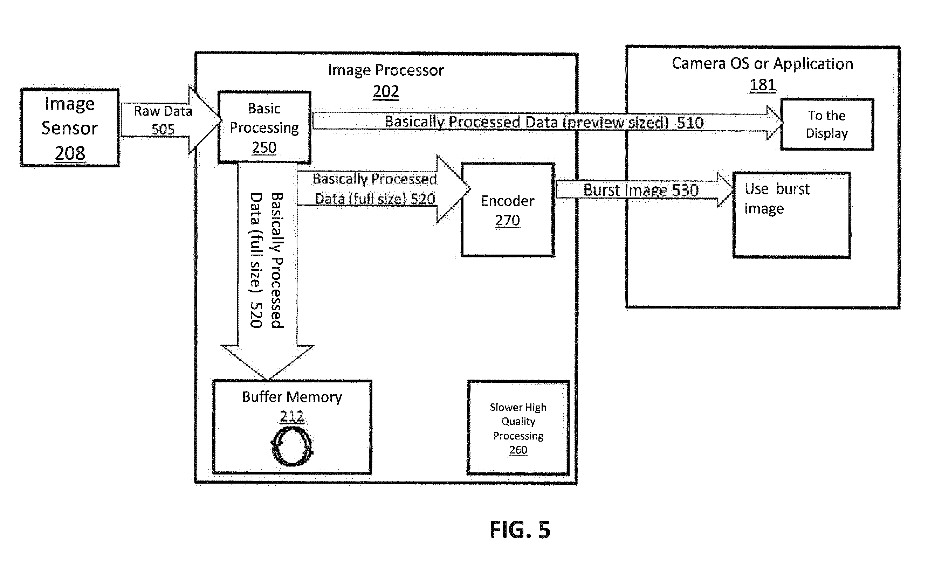

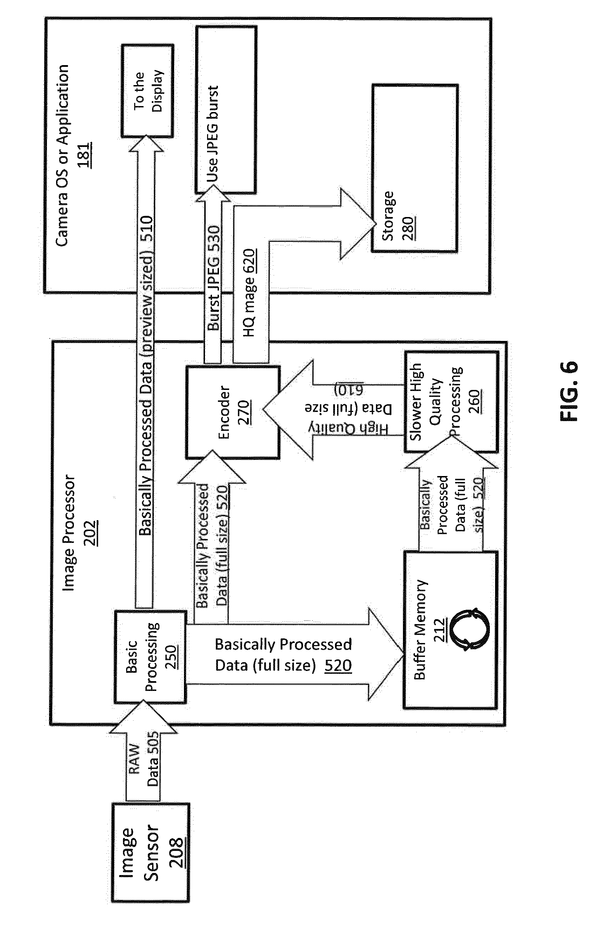

Referring now to Figure 5, the paths of data in one embodiment of the image capture assembly 200 while operating in burst mode with a preview display operating will be described. Raw data 505 from the image sensor 208 is output to the image processor 202. The Basic Processing 250 within the image processor 202 performs first quality processing (or on-the-fly processing) on the raw data 505 to produce basic processed data (e.g., preview sized) 510 that is sent to the operating system 177 or camera application 181 to be displayed on the display 112. Basic processed data (full sized) 520 is also output from the Basic Processing 250 to both the encoder 270 and the buffer memory 212. The encoder 270 encodes the data 520 and outputs encoded burst images 530 to the operating system 177 or camera application 181 for use. The second quality processing function (also referred to as slower high quality processing) 260 of the image processor 202 is shown in Figure 5 but is not used unless an input requesting a high quality image still is received. The handling of such a request for a high quality image while operating in burst mode will now be described with reference to Figure 6.

Figure 6 is the same as Figure 5, with the exception that the buffer memory 212 outputs the basic processed data 520 to the second quality processing 260 where slower higher quality processing is performed. High quality data (full size) 610 is output to the encoder 270 which encodes the high quality data and outputs a high quality image 620 to storage 280.

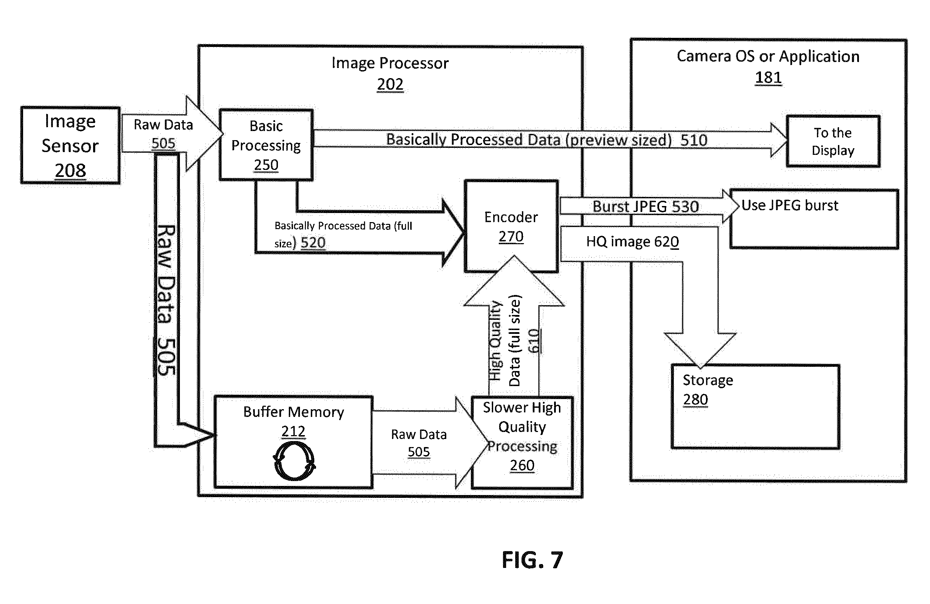

As mentioned above, in some embodiments the image sensor 208 sends the raw data 505 to the buffer memory 212. This embodiment is shown in Figure 7 which differs from Figure 6 in that: the raw data 505 is shown going from the image sensor 208 to the Basic Processing 250 and the buffer memory 212; the basic processed data (full size) 520 is not sent to the buffer memory 212; and the data output from the buffer memory to the slower high quality processing 260 is the raw data 505.

The steps and/or operations in the flowcharts and drawings described herein are for purposes of example only. There may be many variations to these steps and/or operations without departing from the teachings of the present disclosure. For instance, the steps may be performed in a differing order, or steps may be added, deleted, or modified.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description.

## Claims

1. A method of processing a still image on an image processing device operating in burst mode, the method comprising:
processing (410) data provided by an image sensor (208) operating in burst mode at first quality (250) to produce first quality processed data (520);
storing (420) the data to a buffer memory (212) concurrently with the processing at the first quality; and
processing (430) the data stored in the buffer memory (212) at a second quality (260) to produce second quality processed data (610), the second quality processed data being processed at a higher quality than the first quality processed data.

2. The method of claim 1, wherein processing (410) the data provided by the image sensor operating in burst mode at the first quality (250) occurs before storing the data to the buffer memory (212).

3. The method of claim 1 or 2, further comprising encoding the first quality processed data to produce at least one still image (530).

4. The method of claim 3, further comprising using the at least one first still image (530) for a function related to burst mode.

5. The method of claim 4, wherein the function enables scrolling back and forth through images taken in burst mode.

6. The method of any one of claims 1 to 5, further comprising encoding the second quality processed data to produce at least one still image (620).

7. The method of claim 6, further comprising storing the still image (610) to a storage device (280).

8. The method of any one of claims 1 to 7, wherein processing (260) the data stored in the buffer memory (212) at the second quality occurs in response to an input requesting capture of a high quality still image.

9. The method of any one of claims 1 to 8, further comprising:
processing the data at a third quality to produce a preview image (510);
displaying the preview image (510) on a display (112).

10. An image capture assembly (200) for use in an electronic device (100) comprising:
an image sensor (208) capable of operating in burst mode;
an image encoder (270) for encoding data into still images;
a buffer memory (212) and
an image processor (202) coupled to the image sensor (208), the image encoder (270) and the buffer memory (212) and configured to implement the method of any one of claims 1 to 9.

11. The image capture assembly of claim 10 wherein the image encoder is part of the image processor.

12. The image capture assembly of claim 10 or 11 wherein the image processor is an image signal processor.

13. The image capture assembly of any one of claims 10 to 12 wherein the image encoder is a JPEG encoder.

14. The image capture assembly of any one of claims 10 to 13 further comprising a memory (280) for storing images produced by the image encoder.

15. A computer readable medium having computer readable instruction stored thereon that when executed cause a processor to implement the method of any one of claims 1 to 9.
